# EUROPEAN PATENT APPLICATION

(11) **EP 3 342 633 A1**
(43) Date of publication of application: **04.07.2018**
(21) Application number: 16838984.9
(22) Date of filing: 22.07.2016
(51) Int. Cl.: B60L 15/20, B60L 9/18

(54) **CONTROL DEVICE FOR ELECTRIC VEHICLE**

(30) Priority: 25.08.2015 JP 2015165337
(71) Applicant: Hitachi Automotive Systems, Ltd., Hitachinaka-shi, Ibaraki 312-8503 (JP)
(72) Inventor: SUZUKI, Keisuke, Atsugi-shi Kanagawa 243-8510 (JP)
(74) Representative: Hoefer & Partner Patentanwälte mbB
(86) International application number: PCT/JP2016/071525
(87) International publication number: WO 2017/033637

(57) **Abstract**

The present invention provides a control apparatus capable of acquiring a sufficient effect of eliminating or reducing a torsional vibration generated on a drive shaft in an electric vehicle including a drive wheel configured to be driven by an electric motor via the drive shaft. The control apparatus calculates a first damping control torque for canceling out a vibration component based on a difference between a motor rotational speed and a vehicle body speed, and calculates a drive torque instruction value for driving the electric motor by adding a driver request drive torque and the first damping control torque.

## Description

### TECHNICAL FIELD

The present invention relates to a control apparatus for an electric vehicle.

### BACKGROUND ART

A conventional control apparatus for an electric vehicle extracts a difference between a motor rotational speed and an average rotational speed of left and right drive wheels as a vibration component of a torsional vibration in a torque transmission system, and calculates a damping control torque for canceling out this vibration component, thereby correcting a driver request drive torque. One example of the above-described technique is discussed in PTL 1.

### CITATION LIST

### PATENT LITERATURE

PTL 1: Japanese Patent Application Public Disclosure No. 2002-152916

### [Summary of Invention]

### TECHNICAL PROBLEM

There are needs desiring further improvement of the effect of eliminating or reducing the torsional vibration in the above-described conventional apparatus.

An object of the present invention to provide a control apparatus for an electric vehicle that can improve the effect of eliminating or reducing the torsional vibration.

### SOLUTION TO PROBLEM

A control apparatus for an electric vehicle according to one aspect of the present invention calculates a first damping control torque based on a motor rotational speed and a vehicle body speed, and calculates a drive torque instruction value for driving an electric motor based on a driver request drive torque and the first damping control torque.

The control apparatus for the electric vehicle according to the one aspect of the present invention can improve the effect of eliminating or reducing the torsional vibration.

### BRIEF DESCRIPTION OF DRAWINGS

Fig. 1 is a system diagram of an electric vehicle according to a first embodiment.
Fig. 2 is a control block diagram of a vehicle controller 6 according to the first embodiment.
Fig. 3 is a timing chart of a wheel speed, a drive torque, and a vibration detection value when a damping control torque is calculated with use of a high-pass filter.
Fig. 4 is a timing chart illustrating an effect of eliminating or reducing a torsional vibration when the damping control torque is calculated by a driven wheel speed method according to the first embodiment.
Fig. 5 is a system diagram of an electric vehicle according to a second embodiment.
Fig. 6 is a control block diagram of a vehicle controller 6 according to the second embodiment.
Fig. 7 is a system diagram of an electric vehicle according to a third embodiment.
Fig. 8 is a control block diagram of a vehicle controller 6 according to the third embodiment.

### DESCRIPTION OF EMBODIMENTS

### [First Embodiment]

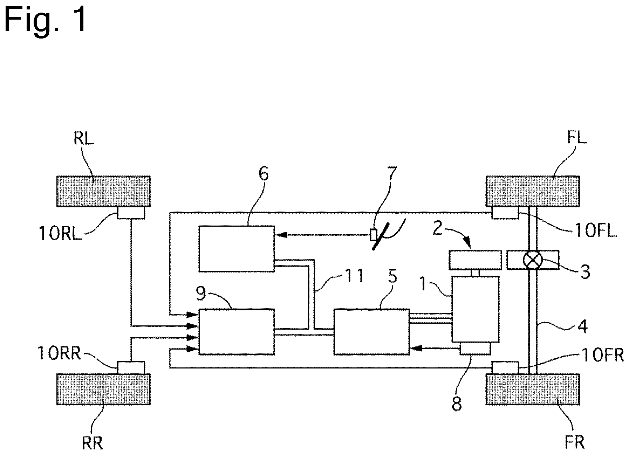

Fig. 1 is a system diagram of an electric vehicle (hereinafter also referred to as simply a vehicle) according to a first embodiment. The vehicle according to the first embodiment is a front-wheel drive vehicle (a two-wheel drive vehicle) in which front wheels FL and FR are driven by an electric motor 1. A differential gear 3 is connected to the electric motor 1 via a speed reduction mechanism 2. A drive shaft 4 is connected to the differential gear 3. The front wheels FL and FR are connected to the drive shaft 4. Power is supplied from a not-illustrated high-voltage battery to the electric motor 1 via an inverter 5. Driving of the inverter 5 is controlled by a vehicle controller 6. The vehicle controller 6 is connected to an accelerator position sensor 7 and a resolver 8 via the inverter 5, and receives an accelerator position signal and a motor rotational speed signal. The resolver 8 is provided on the electric motor 1. Further, the inverter 5 receives wheel speeds of rear wheels RL and RR (a left driven wheel speed and a right driven wheel speed) via a brake controller 9. The brake controller 9 is connected to wheel speed sensors 10FL, 10FR, 10RL, and 10RR (hereinafter also indicated by simply 10) mounted on the individual wheels, and receives a rotational speed signal of each of the wheels. The brake controller 9 adjusts brake fluid to be supplied to a brake unit of each of the wheels and controls a braking torque on each of the wheels based on an amount of a driver's brake operation, the speed of each of the wheels, and the like. Information communication of the inverter 5, the vehicle controller 6, and the brake controller 9 is carried out via a CAN communication line (a communication apparatus) 11. The vehicle controller 6 calculates a drive torque instruction value of the electric motor 1 based on an accelerator position and the like, and drives the inverter 5 according to the drive torque instruction value.

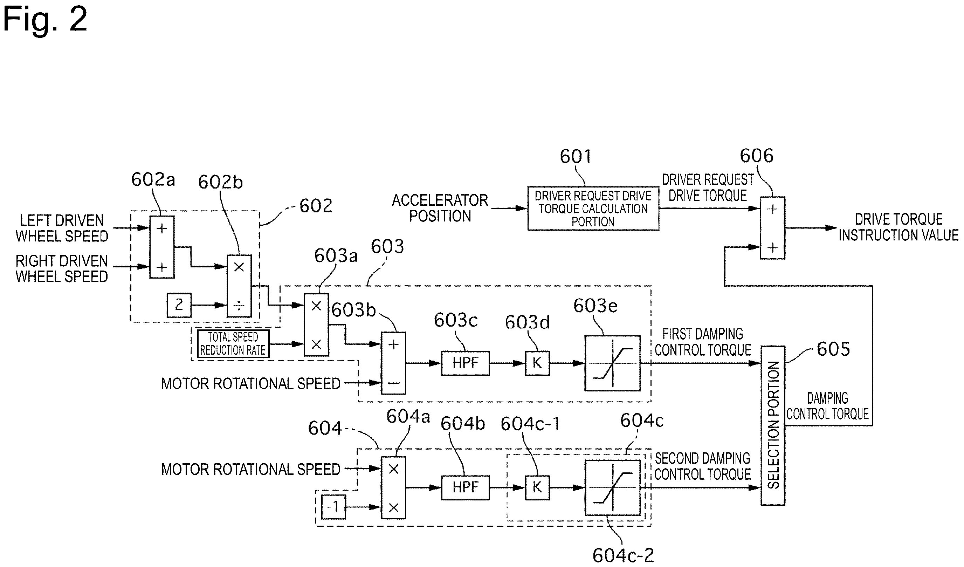

Fig. 2 is a control block diagram of the vehicle controller 6 according to the first embodiment.

A driver request drive torque calculation portion 601 calculates a driver request drive torque based on the accelerator position. The driver request drive torque is set so as to have a larger value as the accelerator position increases.

A vehicle body speed estimation portion 602 estimates a vehicle body speed from left and right driven wheel speeds detected by the rear left wheel speed sensor (driven wheel rotational speed calculation portion) 10RL and the rear right wheel speed sensor (driven wheel rotational speed calculation portion) 10RR. An addition portion 602a adds the left and right driven wheel speeds. A division portion 602b outputs a value calculated by dividing an output of the addition portion 602a by 2, i.e., an average value of the left and right driven wheel speeds as the vehicle body speed.

A first damping control torque calculation portion 603 calculates a first damping control torque based on the vehicle body speed estimated by the vehicle body speed estimation portion 602 and the motor rotational speed detected by the revolver 8. A multiplication portion 603a multiplies the vehicle body speed by a total speed reduction rate (a speed reduction rate of the speed reduction mechanism 2 × a speed reduction rate of the differential gear 3). A subtraction portion 603b extracts a vibration component contained in the motor rotational speed by subtracting the motor rotational speed from an output of the multiplication portion 603a. A high-pass filter 603c gradually subtracts a steady-state deviation component (a deviation due to a difference between a calculated value and an actual value of a tire dynamic radius) from an output of the subtraction portion 603b. A cutoff frequency of the high-pass filter 603c is set to a value that allows a slip of a wheel to be detected (for example, lower than 1 Hz). A gain multiplication portion 603d outputs a value calculated by multiplying the vibration component that has passed through the high-pass filter 603c by a predetermined control gain K as a fist damping control torque. A limiter processing portion 603e limits upper and lower limit values of the first damping control torque within a predetermined range.

A second damping control torque calculation portion 604 calculates a second damping control torque based on the motor rotational speed. A multiplication portion 604a inverts a sign by multiplying the motor rotational speed by -1. A high-pass filter 604b gradually subtracts a vibration component having a predetermined or lower frequency from an output of the multiplier 604a. A cutoff frequency of the high-pass filter 604b is set to such a characteristic that a frequency of a torsional vibration on a high µ road (for example, approximately 5 to 9 Hz) and a frequency of a vibration due to sudden acceleration (for example, approximately 1 to 4 Hz) can be separated from each other, i.e., a value capable of gradually subtracting a sudden acceleration component contained in the motor rotational speed on the high µ road. A high-pass filter method damping control torque calculation portion 604c calculates the second damping control torque based on the vibration component that has passed through the high-pass filter 604b. A gain multiplication portion 604c-1 outputs a value calculated by multiplying the vibration component that has passed through the high-pass filter 604b by a predetermined control gain K as the second damping control torque. A limiter processing portion 604c-2 limits upper and lower limit values of the second damping control torque within a predetermined range.

A selection portion 605 selects one of the first damping control torque calculated by the first damping control torque calculation portion 603 and the second damping control torque calculated by the second damping control torque calculation portion 604, and outputs the selected torque as the damping control torque. The selection portion 605 selects one of the first damping control torque and the second damping control torque according to, for example, a state of the vehicle. The selection portion 605 always selects the first damping control torque when the vehicle is started up with the aim of simplifying the control.

A drive torque instruction value calculation portion 606 calculates the drive torque instruction value by adding the driver request drive torque calculated by the driver request drive torque calculation portion 601 and the damping control torque output from the selection portion 605.

### [Improvement of Effect of Eliminating or Reducing Torsional Vibration]

When the motor torque is raised in a stepwise manner at the time of sudden acceleration on the electric vehicle, a torsional vibration is generated in a torque transmission system due to a repetition of torsion and release of the drive shaft. The electric motor has a high torque responsiveness to the engine, and therefore leads to deterioration of ride comfort and an increase in a vibration/noise level upon transmission of the torsional vibration to the vehicle body via a mount, especially when the torsional vibration is added to a resonant frequency of the vehicle body. Therefore, the conventional electric vehicle extracts the difference between the motor rotational speed and the average rotational speed of the left and right drive wheels (the drive wheel speeds) as the vibration component of the torsional vibration, and calculates the damping control torque for canceling out this vibration component, thereby correcting the driver request drive torque.

However, when calculating the damping control torque from the difference between the motor rotational speed and the drive wheel speed, the conventional electric vehicle cannot calculate an appropriate damping control torque with respect to the torsional vibration especially while being running on a low µ road, thereby failing to acquire a sufficient effect of damping the vibration. The reason therefor will be described now.

Generally, the rotational speed of each of the wheels is detected by the wheel speed sensor and is input to the brake controller, which means that the controller controlling the electric motor acquires the drive wheel speed signal from the brake controller via the CAN communication line. Therefore, a communication delay occurs in the drive wheel speed acquired by the controller from the actual drive wheel speed (the value detected by the sensor). On the other hand, no communication delay occurs in the motor rotational speed because the motor rotational speed is directly input from the resolver to the controller. Then, inertia of the tire reduces on the low µ road, and therefore a vibration is generated in the drive wheel speed. Further, a frequency of the torsional vibration on the low µ road (approximately 10 to 20 Hz) is higher than a frequency of the torsional vibration on the high µ road (approximately 5 to 9 Hz). Therefore, when the damping vibration torque is calculated while the vehicle is running on the low µ road, a phase shift occurs between the vibration of the motor rotational speed and the vibration of the drive wheel speed, and an inappropriate damping braking torque (having a shifted phase) is calculated.

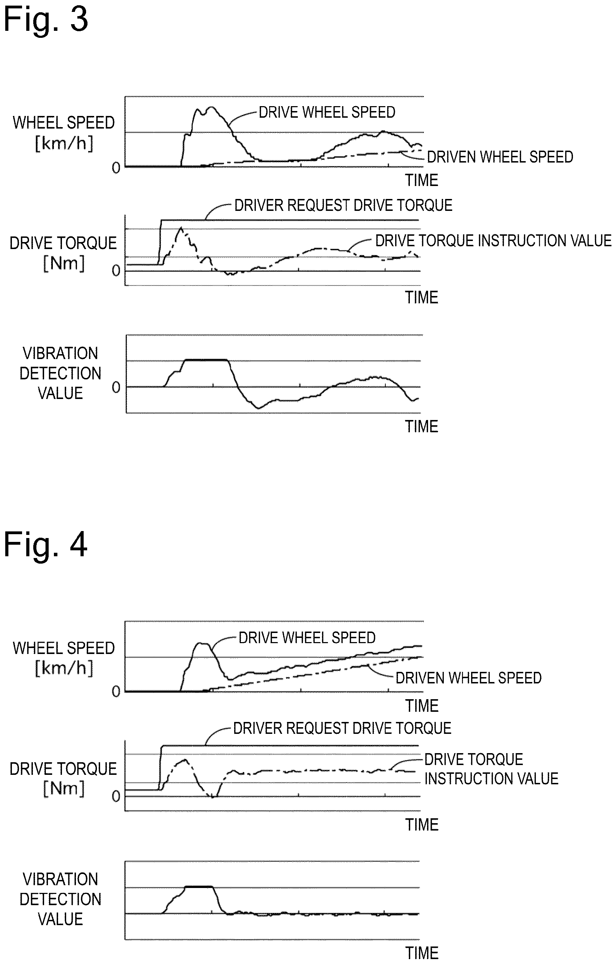

Known methods for avoiding an influence of the above-described communication delay include a method that directly inputs the drive wheel speed from the wheel speed sensor without the intervention of the CAN communication line, and a method that calculates the damping control torque from the motor rotational speed with use of a high-pass filter. However, the former method raises a problem of a cost increase such as an addition of a circuit. Further, the latter method leads to deterioration of a slip control performance because a damping control torque having a shifted phase is calculated at an initial stage of a slip due to the slip of the drive wheel. Fig. 3 is a timing chart of the wheel speed, the drive torque, and a vibration detection value when the damping control torque is calculated with use of the high-pass filter. The method using the high-pass filter cannot distinguish the slip of the drive wheel (= an increase in the motor speed) and the sudden acceleration from each other, and therefore calculates the damping control torque having the phase shifted from the slip of the drive wheel at the initial stage of the slip. Therefore, the vibration is generated in the drive torque instruction value, so that the slip control performance is deteriorated.

On the other hand, in the first embodiment, the first damping control torque calculation portion 603 calculates the first damping control torque based on the difference between the motor rotational speed and the vehicle body speed estimated from the left and right driven wheel speeds. The vehicle body speed does not vibrate regardless of µ of the road surface, and therefore the phase shift from the motor rotational speed is not generated. Further, the present embodiment can distinguish the acceleration component and the slip of the drive wheel from each other by subtracting the vehicle body speed from the motor rotational speed. Therefore, the present embodiment can calculate an appropriate first damping control torque with respect to the torsional vibration regardless of µ of the road surface, thereby improving the effect of eliminating or reducing the torsional vibration. Fig. 4 is a timing chart illustrating the effect of eliminating or reducing the torsional vibration when the damping control torque is calculated by the driven wheel speed method according to the first embodiment. The first embodiment can detect the vibration without the phase shift generated from the slip of the drive wheel, and therefore does not impede the slip control and is excellent in a performance of converging the slip. Further, the present embodiment is unaffected by the influence of the communication delay, and therefore can be applied to a conventional system that introduces the left and right driven wheel speeds from the brake controller 9 via the CAN communication line. Therefore, the present embodiment does not require the addition of the circuit or the like for directly inputting the driven wheel speed from the wheel speed sensor 10, thereby succeeding in preventing or cutting down the complication of the system and the cost increase.

In the first embodiment, the second damping control torque calculation portion 604 calculates the second damping control torque from the motor speed with use of the high-pass filter 604b, and the selection portion 605 selects one of the first damping control torque and the second damping control torque according to the state of the vehicle to set the selected torque as a damping control elimination/reduction torque. By this configuration, the present embodiment can appropriately select one of the first damping control torque and the second damping control torque according to a situation of the vehicle by, for example, selecting the second damping control torque in such a scene that the vehicle body speed cannot be estimated or is estimated with low accuracy, and selecting the first damping control torque in another scene, thereby improving the effect of eliminating or reducing the torsional vibration for each situation.

The first embodiment brings about the following advantageous effects.
(1) The control apparatus, which is used for the electric vehicle including the drive wheel (the front wheels FL and RR) configured to be driven by the electric motor 1 via the drive shaft 4, includes the driver request drive torque calculation portion 601 configured to calculate the driver request drive torque based on the state of the driver's operation, the vehicle body speed estimation portion 602 configured to estimate the vehicle body speed, the first damping control torque calculation portion 603 configured to calculate the first damping control torque based on the electric motor speed and the estimated vehicle body speed, and the drive torque instruction value calculation portion 606 configured to calculate the drive torque instruction value for driving the electric motor 1 based on the calculated driver request drive torque and the calculated first damping control torque.
   Therefore, the present embodiment can improve the effect of eliminating or reducing the torsional vibration.
(2) In the control apparatus for the electric vehicle described in (1), the electric vehicle includes the driven wheel (the rear wheels RL and RR) independent of the drive wheel. The vehicle body speed estimation portion 602 estimates the vehicle body speed based on the rotational speed of the driven wheel. The first damping control torque calculation portion 603 calculates the first damping control torque based on the difference between the motor rotational speed and the estimated vehicle body speed.
   Therefore, the present embodiment can estimate the vehicle body speed with high accuracy, thereby extracting the torsional vibration component with improved accuracy.
(3) The control apparatus for the electric vehicle described in (2) further includes the second damping control torque calculation portion 604 configured to calculate the second damping control torque, and the selection portion 605 configured to select one of the calculated first damping control torque and the calculated second damping control torque. The drive torque instruction calculation portion 606 calculates the drive torque instruction value based on the selected one of the damping control torques and the calculated driver request torque.
   Therefore, the present embodiment can improve the effect of eliminating or reducing the torsional vibration according to the situation.
(4) In the control apparatus for the electric vehicle described in (3), the second damping control torque calculation portion 604 includes the high-pass filter 604b configured to damp the vibration component having the predetermined or lower frequency, and the high-pass filter method damping control torque calculation portion 604c configured to calculate the second damping control torque with respect to the vibration component that has passed through the high-pass filter 604b.
   Therefore, the present embodiment can improve the effect of eliminating or reducing the torsional vibration according to the situation.
(5) In the control apparatus for the electric vehicle described in (4), the selection portion 605 selects one of the damping control torques according to the state of the vehicle.
   Therefore, the present embodiment can improve the effect of eliminating or reducing the torsional vibration according to the situation of the vehicle.
(6) In the control apparatus for the electric vehicle described in (4), the selection portion 605 selects the first damping control torque when the vehicle is started up.
   Therefore, the present embodiment can reduce switching of the selection, thereby simplifying the control.
(7) The control apparatus for the electric vehicle described in (2) further includes the brake controller 9 configured to receive the rotational speed signal output from each of the rear left and right wheel speed sensors 10RL and 10RR configured to calculate the rotational speed of each of the left and right driven wheels. The vehicle body speed estimation portion 602 receives the speed of each of the left and right driven wheels from the brake controller 9 via the communication line 11.
   Therefore, the present embodiment can prevent or cut down the complication of the system and the cost increase.
(8) The control apparatus, which is used for the electric vehicle including the electric motor 1 configured to drive the drive wheel (the front wheels FL and FR) via the drive shaft 4, includes the driver request drive torque calculation portion 601 configured to calculate the driver request torque for controlling the electric motor 1 based on the state of the driver's operation, the first damping control torque calculation portion 603 configured to input the vehicle body speed estimated based on the state of the vehicle and calculate the damping control torque based on the difference between the motor rotational speed and the estimated vehicle body speed, and the drive torque instruction value calculation portion 606 configured to calculate the drive torque instruction value for driving the electric motor 1 based on the calculated driver request torque and the calculated damping control torque.
   Therefore, the present embodiment can improve the effect of eliminating or reducing the torsional vibration.
(9) The control apparatus includes the drive torque instruction value calculation portion 606 configured to calculate the drive torque instruction value with respect to the drive wheel (the front wheels FL and FR) driven by the electric motor 1 via the drive shaft 4, the driver request drive torque calculation portion 601 configured to calculate the driver request drive torque based on the state of the driver's operation, and the first damping control torque calculation portion 603 configured to calculate the damping control torque based on the difference between the vehicle body speed estimated based on the state of the wheel (the rear wheels RL and RR) independent of the drive wheel and the number of rotations of the motor rotational speed. The drive torque instruction value calculation portion 606 calculates the drive torque instruction value for driving the electric motor 1 based on the calculated driver request drive torque and the calculated damping control torque.

Therefore, the present embodiment can improve the effect of eliminating or reducing the torsional vibration.

### [Second Embodiment]

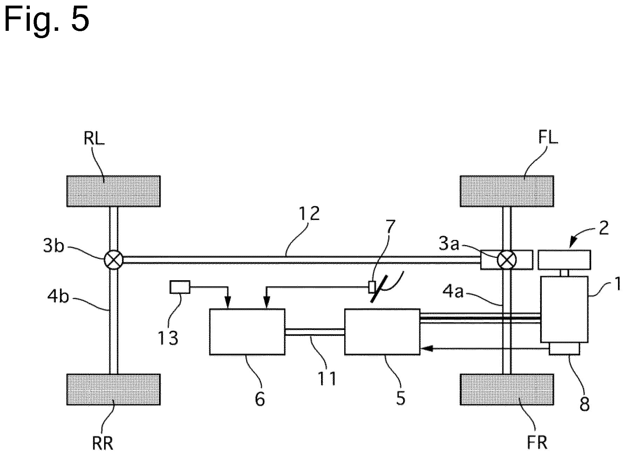

Next, a second embodiment will be described. The second embodiment has a basic configuration that is similar to the first embodiment, and therefore will be described focusing on only differences therefrom. Fig. 5 is a system diagram of an electric vehicle according to the second embodiment. The vehicle according to the second embodiment is a four-wheel drive vehicle in which the front wheels FL and FR and the rear wheels RL and RR are driven by the electric motor 1. A not-illustrated transfer case is connected to the electric motor 1 via the speed reduction mechanism 2. A front differential gear 3a and a propeller shaft 12 are connected to the transfer case. A front drive shaft 4a is connected to the front differential gear 3a, and the front wheels FL and RR are connected to the front drive shaft 4a. A rear differential gear 3b is connected to the propeller shaft 12. A rear drive shaft 4b is connected to the rear differential gear 3b. The rear wheels RL and RR are connected to the rear drive shaft 4b. A longitudinal G sensor (a longitudinal acceleration calculation portion) 13 is connected to the vehicle controller 6, and the vehicle controller 6 receives a longitudinal G sensor value (the state of the vehicle).

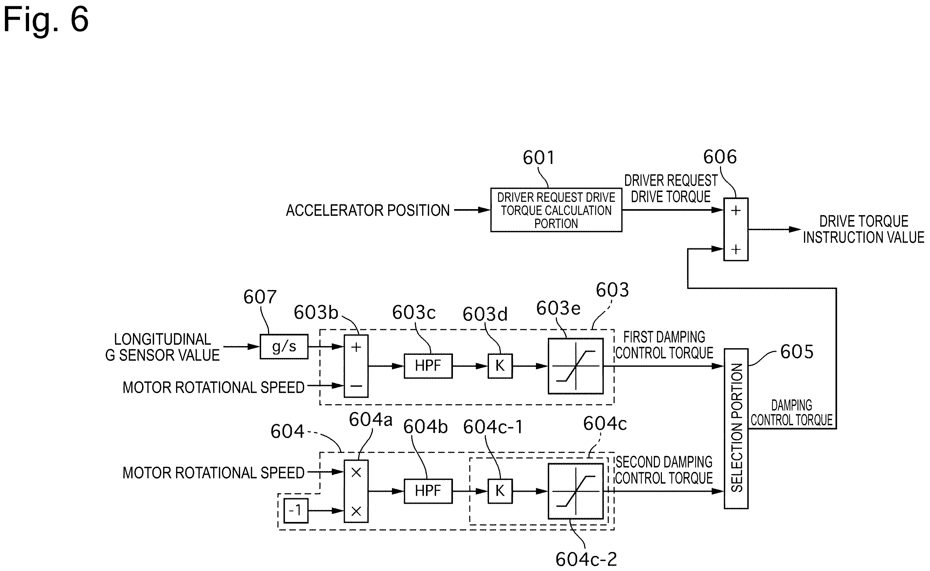

Fig. 6 is a control block diagram of the vehicle controller 6 according to the second embodiment.

A vehicle body speed estimation portion 607 estimates the vehicle body speed by integrating the longitudinal G sensor value output from the longitudinal G sensor 13, and further multiplying it by (the vehicle body speed - a motor rotational speed conversion coefficient g). The electric vehicle according to the second embodiment is a full-time four-wheel drive vehicle, and therefore the vehicle body speed cannot be estimated with use of the driven wheel speeds. Therefore, in the second embodiment, the vehicle body speed is estimated with use of the longitudinal G of the vehicle that is detected by the longitudinal G sensor 13. The first damping control torque calculation portion 603 calculates the first damping control torque based on the vehicle body speed estimated by the vehicle body speed estimation portion 607 and the motor rotational speed detected by the resolver 8.

The second embodiment brings about the following advantageous effects.
(10) The control apparatus for the electric vehicle described in (1) further includes the longitudinal G sensor 13 configured to calculate the acceleration in the longitudinal direction of the vehicle (a front-back direction of the vehicle). The vehicle body speed estimation portion 607 estimates the vehicle body speed by integrating the calculated acceleration in the longitudinal direction.

Therefore, the present embodiment can estimate the vehicle body speed with high accuracy without use of the rotational speed of the wheel, thereby improving the effect of eliminating or reducing the torsional vibration in the four-wheel drive vehicle.

### [Third Embodiment]

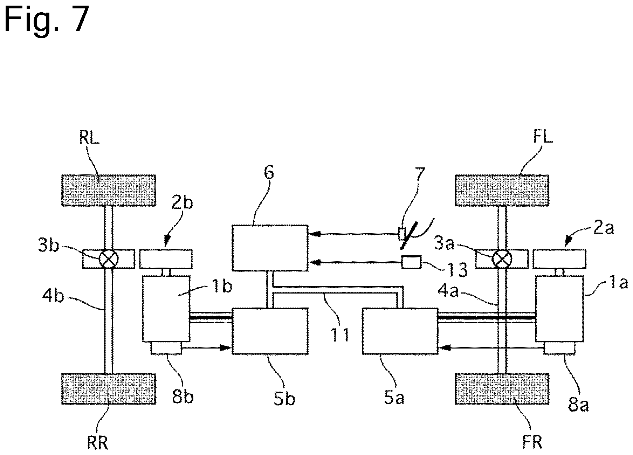

Next, a third embodiment will be described. The third embodiment has a basic configuration that is similar to the second embodiment, and therefore will be described focusing on only differences therefrom. Fig. 7 is a system diagram of an electric vehicle according to the third embodiment. A vehicle according to the third embodiment is a four-wheel drive vehicle in which the front wheels FL and RR are driven by a front electric motor 1a and the rear wheels RL and RR are driven by a rear electric motor 1b. The front differential gear 3a is connected to the front electric motor 1a via a front speed reduction mechanism 2a. The front drive shaft 4a is connected to the front differential gear 3a. The front wheels FL and FR are connected to the front drive shaft 4a. The rear differential gear 3b is connected to the rear electric motor 1b via a rear speed reduction mechanism 2b. The rear drive shaft 4b is connected to the rear differential gear 3b. The rear wheels RL and RR are connected to the rear drive shaft 4b. Power is supplied from a not-illustrated high-voltage battery to the front and rear electric motors 1a and 1b via front and rear inverters 5a and 5b, respectively. Driving of the front and rear inverters 5a and 5b is controlled by the vehicle controller 6. The vehicle controller 6 is connected to a front resolver 8a and a rear resolver 8b, and receives a front motor rotational speed signal and a rear motor rotational speed signal. The vehicle controller 6 calculates front and rear drive torque instruction values of the front and rear electric motors 1a and 1b based on the accelerator position and the like, and drives the front and rear inverters 5a and 5b according to the front and rear drive torque instruction values.

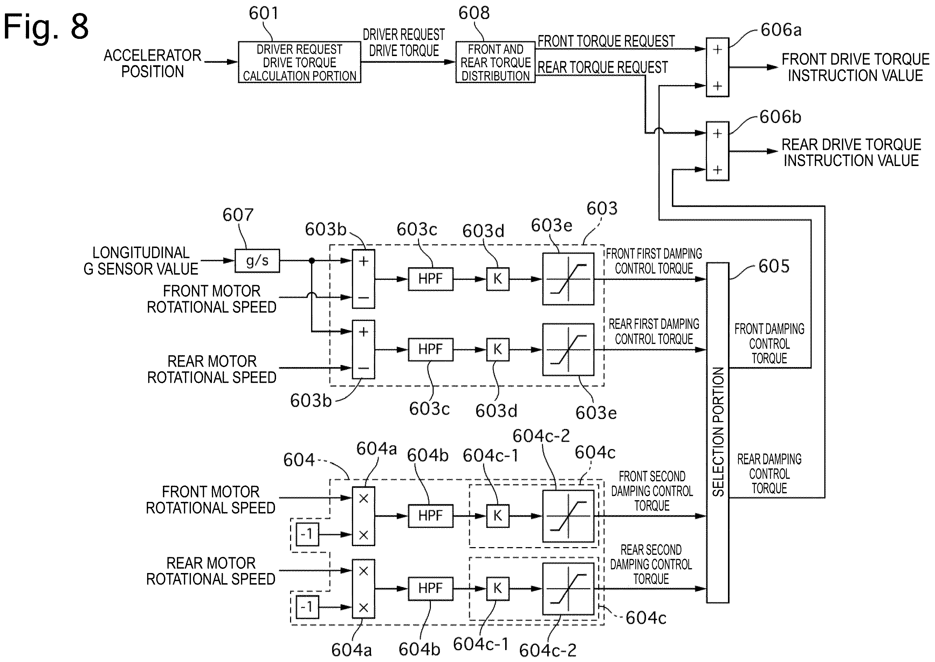

Fig. 8 is a control block diagram of the vehicle controller 6 according to the third embodiment.

A front and rear torque distribution portion 608 distributes the driver request drive torque calculated by the driver request drive torque calculation portion 601 into a front torque request and a rear torque request based on predetermined front-rear distribution.

The first damping control torque calculation portion 603 calculates a front first damping control torque based on the vehicle body speed estimated by the vehicle body speed estimation portion 607 and a front motor rotational speed detected by the front resolver 8a, and also calculates a rear first damping control torque based on the vehicle body speed estimated by the vehicle body speed estimation portion 607 and a rear motor rotational speed detected by the rear resolver 8b.

The second damping control torque calculation portion 604 calculates a front second damping control torque based on the front motor rotational speed, and also calculates a rear second damping control torque based on the rear motor rotational speed.

The selection portion 605 selects one of the front first damping control torque and the front second damping control torque and one of the rear first damping control torque and the rear first damping control torque, and outputs the selected torques as a front damping control torque and a rear damping control torque.

A front drive torque instruction value calculation portion 606a calculates a front drive torque instruction value by adding the front torque request output from the front and rear torque distribution portion 608 and the front damping control torque output from the selection portion 605, and calculates a rear drive torque instruction value by adding the rear torque request output from the front and rear torque distribution portion 608 and the rear damping control torque output from the selection portion 605.

In this manner, even in the four-wheel drive vehicle in which the front wheels FL and FR and the rear wheels RL and RR are driven by the different front and rear electric motors 1a and 1b, the present embodiment can improve an effect of eliminating or reducing torsional vibrations generated in both the torque transmission systems by calculating the first damping control torque based on the motor rotational speed and the vehicle body speed in each of the torque transmission systems.

Having described embodiments for implementing the present invention based on the exemplary embodiments thereof, the specific configuration of the present invention is not limited to the configurations indicated in the exemplary embodiments, and the present invention also includes a design modification and the like thereof made within a range that does not depart from the spirit of the present invention.

For example, in the exemplary embodiments, the vehicle has been described citing the electric vehicle as an example, but the present invention can also be applied even to a hybrid vehicle including both the engine and the electric motor.

In the following description, technical ideas other than the inventions set forth in the claims that are recognizable from the exemplary embodiments will be described.
(a) In the control apparatus for the electric vehicle described in (9), the electric vehicle includes the driven wheel independent of the drive wheel. The vehicle body speed estimation portion estimates the vehicle body speed based on the rotational speed of the driven wheel. The first damping control torque calculation portion calculates the damping control torque based on the difference between the rotational speed of the electric motor and the estimated vehicle body speed.
   Therefore, the present embodiment can estimate the vehicle body speed with high accuracy, thereby extracting the torsional vibration component with improved accuracy.
(b) The control apparatus for the electric vehicle described in (a) further includes the brake controller configured to receive the rotational speed signal output from the driven wheel rotational speed calculation portion configured to calculate the rotational speed of the driven wheel. The vehicle body speed estimation portion receives the rotational speed of the driven wheel from the brake controller via the communication apparatus.
   Therefore, the control apparatus can be applied to the conventional system, thereby eliminating the necessity of the addition of the circuit and the like for directly inputting the rotational speed of the driven wheel and thus succeeding in preventing or cutting down the complication of the system and the cost increase.
(c) In the control apparatus for the electric vehicle described in (9), the state of the vehicle is the acceleration in the longitudinal direction of the vehicle.
   Therefore, the present embodiment can estimate the vehicle body speed with high accuracy without use of the rotational speed of the wheel, thereby improving the effect of eliminating or reducing the torsional vibration even when all the wheels of the all-wheel drive vehicle are driven.
(d) In the control apparatus for the electric vehicle described in (9), the electric vehicle is the all-wheel drive vehicle.
   Therefore, the present embodiment can improve the effect of eliminating or reducing the torsional vibration in the all-wheel drive vehicle.
   (14) The control apparatus for the electric vehicle includes the drive torque instruction value calculation portion configured to calculate the drive torque instruction value with respect to the drive wheel driven by the electric motor via the drive shaft, the driver request drive torque calculation portion configured to calculate the driver request drive torque based on the state of the driver's operation, and the damping control torque calculation portion configured to calculate the damping control torque based on the difference between the vehicle body speed estimated based on the state of the wheel independent of the drive wheel and the number of rotations of the electric motor. The drive torque instruction value calculation portion can be configured to calculate the drive torque instruction value for driving the electric motor based on the calculated driver request drive torque and the calculated damping control torque.
(e) In the control apparatus for the electric vehicle described in (14), the vehicle body speed is estimated based on the rotational speed of the driven wheel.
   Therefore, the present embodiment can improve the effect of eliminating or reducing the torsional vibration in the two-wheel drive vehicle.
(f) The control apparatus for the electric vehicle described in (e) further includes the brake controller configured to receive the rotational speed signal output from the driven wheel rotational speed calculation portion configured to calculate the rotational speed of the driven wheel. The vehicle body speed estimation portion receives the rotational speed of the driven wheel from the brake controller via the communication apparatus.
   Therefore, the control apparatus can be applied to the conventional system, thereby eliminating the necessity of the addition of the circuit and the like for directly inputting the rotational speed of the driven wheel and thus succeeding in preventing or cutting down the complication of the system and the cost increase.
(g) In the control apparatus for the electric vehicle described in (14), the vehicle body speed is estimated based on the acceleration in the longitudinal direction of the vehicle.

Therefore, the present embodiment can estimate the vehicle body speed with high accuracy without use of the rotational speed of the wheel, thereby extracting the torsional vibration component with improved accuracy.

Having described merely several embodiments of the present invention, those skilled in the art will be able to easily appreciate that the embodiments described as the examples can be modified or improved in various manners without substantially departing from the novel teachings and advantages of the present invention. Therefore, such modified or improved embodiments are intended to be also contained in the technical scope of the present invention. The above-described embodiments may also be arbitrarily combined.

The present application claims priority under the Paris Convention to Japanese Patent Application No. 2015-165337 filed on August 25, 2015. The entire disclosure of Japanese Patent Application No. 2015-165337 filed on August 25, 2015 including the specification, the claims, the drawings, and the abstract is incorporated herein by reference in its entirety.

### REFERENCE SIGN LIST

- FL, FR: front wheel (drive wheel)
- RL, RR: rear wheel (driven wheel)
- 1: electric motor
- 2: speed reduction mechanism
- 3: differential gear
- 4: drive shaft
- 5: inverter
- 6: vehicle controller
- 7: accelerator position sensor
- 8: resolver
- 9: brake controller
- 10: wheel speed sensor
- 11: CAN communication line (communication apparatus)
- 601: driver request drive torque calculation portion
- 602: vehicle body speed estimation portion
- 603: first damping control torque calculation portion
- 604: second damping control torque calculation portion 605 selection portion
- 606: drive torque instruction value calculation portion

## Claims

1. A control apparatus for an electric vehicle including a drive wheel configured to be driven by an electric motor via a drive shaft, the control apparatus comprising:
a driver request drive torque calculation portion configured to calculate a driver request drive torque based on an state of a driver's operation;
a vehicle body speed estimation portion configured to estimate a vehicle body speed;
a first damping control torque calculation portion configured to calculate a first damping control torque based on a rotational speed of the electric motor and the estimated vehicle body speed; and
a drive torque instruction value calculation portion configured to calculate a drive torque instruction value for driving the electric motor based on the calculated driver request drive torque and the calculated first damping control torque.

2. The control apparatus for the electric vehicle according to claim 1, wherein the electric vehicle includes a driven wheel independent of the drive wheel,
wherein the vehicle body speed estimation portion estimates the vehicle body speed based on a rotational speed of the driven wheel, and
wherein the first damping control torque calculation portion calculates the first damping control torque based on a difference between the rotational speed of the electric motor and the estimated vehicle body speed.

3. The control apparatus for the electric vehicle according to claim 2, further comprising
a second damping control torque calculation portion configured to calculate a second damping control torque; and
a selection portion configured to select one of the calculated first damping control torque and the calculated second damping control torque,
wherein the drive torque instruction calculation portion calculates the drive torque instruction value based on the selected one of the damping control torques and the calculated driver request torque.

4. The control apparatus for the electric vehicle according to claim 3, wherein the second damping control torque calculation portion includes a high-pass filter configured to damp a vibration component having a predetermined or lower frequency, and a high-pass method damping control torque calculation portion configured to calculate the second damping control torque with respect to a vibration component that has passed through the high-pass filter.

5. The control apparatus for the electric vehicle according to claim 4, wherein the selection portion selects one of the damping control torques according to a state of the vehicle.

6. The control apparatus for the electric vehicle according to claim 4, wherein the selection portion selects the first damping control torque when the vehicle is started up.

7. The control apparatus for the electric vehicle according to claim 2, further comprising a brake controller configured to receive a rotational speed signal output from a driven wheel rotational speed calculation portion configured to calculate the rotational speed of the driven wheel,
wherein the vehicle body speed estimation portion receives the rotational speed of the driven wheel from the brake controller via a communication apparatus.

8. The control apparatus for the electric vehicle according to claim 1, further comprising a longitudinal acceleration calculation portion configured to calculate an acceleration in a longitudinal direction of the vehicle,
wherein the vehicle body speed estimation portion estimates the vehicle body speed by integrating the calculated acceleration in the longitudinal direction.

9. A control apparatus for an electric vehicle including an electric motor configured to drive a drive wheel via a drive shaft, the control apparatus comprising:
a driver request drive torque calculation portion configured to calculate a driver request torque for controlling the electric motor based on a state of a driver's operation;
a damping control torque calculation portion configured to input a vehicle body speed estimated based on a state of the vehicle, and calculate a damping control torque based on a difference between the calculated rotational speed of the electric motor and the estimated vehicle body speed; and
a drive torque instruction value calculation portion configured to calculate a drive torque instruction value for driving the electric motor based on the calculated driver request torque and the calculated damping control torque.

10. The control apparatus for the electric vehicle according to claim 9, wherein the electric vehicle includes a driven wheel independent of the drive wheel,
wherein the vehicle body speed estimation portion estimates the vehicle body speed based on a rotational speed of the driven wheel, and
wherein the first damping control torque calculation portion calculates the damping control torque based on a difference between the rotational speed of the electric motor and the estimated vehicle body speed.

11. The control apparatus for the electric vehicle according to claim 10, further comprising a brake controller configured to receive a rotational speed signal output from a driven wheel rotational speed calculation portion configured to calculate the rotational speed of the driven wheel,
wherein the vehicle body speed estimation portion receives the rotational speed of the driven wheel from the brake controller via a communication apparatus.

12. The control apparatus for the electric vehicle according to claim 9, wherein the state of the vehicle is an acceleration in a longitudinal direction of the vehicle.

13. The control apparatus for the electric vehicle according to claim 9, wherein the electric vehicle is an all-wheel drive vehicle.

14. A control apparatus for an electric vehicle, the control apparatus comprising:
a drive torque instruction value calculation portion configured to calculate a drive torque instruction value with respect to a drive wheel driven by an electric motor via a drive shaft;
a driver request drive torque calculation portion configured to calculate a driver request drive torque based on a state of a driver's operation; and
a damping control torque calculation portion configured to calculate a damping control torque based on a difference between a vehicle body speed estimated based on a state of a wheel independent of the drive wheel and the number of rotations of the electric motor,
wherein the drive torque instruction value calculation portion calculates the drive torque instruction value for driving the electric motor based on the calculated driver request drive torque and the calculated damping control torque.

15. The control apparatus for the electric vehicle according to claim 14, wherein the vehicle body speed is estimated based on a rotational speed of a driven wheel.

16. The control apparatus for the electric vehicle according to claim 15, further comprising a brake controller configured to receive a rotational speed signal output from a driven wheel rotational speed calculation portion configured to calculate the rotational speed of the driven wheel,
wherein the vehicle body speed estimation portion receives the rotational speed of the driven wheel from the brake controller via a communication apparatus.

17. The control apparatus for the electric vehicle according to claim 14, wherein the vehicle body speed is estimated based on an acceleration in a longitudinal direction of the vehicle.
